# EUROPEAN PATENT SPECIFICATION

(11) **EP 3 408 509 B1**
(45) Date of publication and mention of the grant of the patent: **27.11.2019**
(21) Application number: 17703225.7
(22) Date of filing: 26.01.2017
(51) Int. Cl.: F01N 3/08, F01N 3/10, F01N 3/20, F01N 3/035, F01N 13/00, F01N 3/28, B01J 37/02, B01J 37/04, B01J 35/00, B01J 23/10, B01J 23/00, B01J 23/44, B01J 23/46, B01D 53/94, B01J 29/72, B01J 35/04, B01J 37/00

(54) **EXHAUST SYSTEM**
ABGASSYSTEM
SYSTÈME D'ÉCHAPPEMENT

(30) Priority: 26.01.2016 GB 201601430
(43) Date of publication of application: 05.12.2018
(73) Proprietor: Johnson Matthey Public Limited Company, London EC4A 4AB (GB)
(72) Inventor: BROWN, Gavin, Royston Hertfordshire SG8 5HE (GB); CHIFFEY, Andrew, Royston Hertfordshire SG8 5HE (GB); RADCLIFFE, Jonathan, Royston Hertfordshire SG8 5HE (GB)
(74) Representative: Nunn, Andrew Dominic
(86) International application number: PCT/IB2017/050414
(87) International publication number: WO 2017/130131

(56) References cited:
- WO-A1-2012/175948
- WO-A1-2015/036797
- GB-A- 2 513 364
- US-A1- 2016 008 759

## Description

The present invention relates to exhaust systems for internal combustion engines, preferably compression ignition (Diesel) engines, to catalysed substrates for use in such exhaust systems, to methods of making such catalysed substrates and to methods of treating exhaust gases.

Internal combustion engines are a potential source of pollutants including NOₓ, carbon monoxide, particulates, hydrocarbons, hydrogen sulphide and ammonia.

Increasingly strict environmental regulations have been enacted in economies such as the European Union and the USA and throughout the world to reduce the emission of pollutants into the atmosphere from various sources, in particular, internal combustion (IC) engines. There have been a number of solutions proposed to the problem of reducing emissions from IC engines.

WO-A-2014/080220 discloses a zoned catalyst on a monolithic substrate for controlling hydrogen sulphide gas formed in a lean NOₓ trap during desulfation.

WO-A-2010/004320 and WO-A-2012/175948 each disclose an exhaust system for an internal combustion engine for treating a range of pollutants.

WO-A-2013/088128 discloses an exhaust system for an internal combustion engine comprising a platinum-containing catalyst in a first washcoat coating disposed on a substrate monolith, which platinum-containing catalyst is liable to volatilise in high temperatures disposed upstream of a catalyst for selectively catalysing the reduction of oxides of nitrogen to dinitrogen with a nitrogenous reductant.

WO-A-2005/5014146 discloses a catalyst arrangement using a single monolith and a method of purifying the exhaust gas of internal combustion engines operated under lean conditions.

WO-A-2011/154912 discloses a nitrogen oxide storage catalyst comprising a first and a second washcoat layer on a honeycomb type substrate, the first washcoat layer containing substantially no Rh and the second washcoat layer comprising Rh.

EP-A-0 560 991 discloses a device for purifying the exhaust of an internal combustion engine using a NOₓ absorbent.

EP-A-0 766 993 discloses a wall-flow type filter for purifying exhaust gases having a number of cells formed in the direction of flow of the exhaust gases and a catalyst being carried in the pores formed in the porous walls of the cells.

GB-A-2513364 discloses a positive ignition engine and exhaust system comprising catalyzed zone-coated filter substrate.

WO-A-2012/175948 discloses a catalyzed substrate and exhaust system for internal combustion engines.

Pollutants of major concern are nitrogen oxides (NO_{X}) which are produced, for example, when nitrogen in the air reacts with oxygen within an IC engine. Such nitrogen oxides may include nitrogen monoxide and/or nitrogen dioxide.

One catalytic method to reduce NO_{X} emissions is the lean NO_{X} trap which efficiently converts NO_{X} from an internal combustion engine to nitrogen, although some exhaust gas NO_{X} may slip through as the trap becomes saturated. Some by-products may also be produced by a lean NO_{X} trap, for example, non-selective reduction pathways may result in the production of ammonia. Lean NOxtraps are sometimes referred to in the art as NO_{X} traps, NO_{X} adsorber catalysts (NACs) or NO_{X} sorber catalysts (NSC). Such terms are used interchangeably herein, provided the function is to adsorb NO_{X} from lean (air/gas ratio of lambda >1) exhaust gas and to desorb and reduce NO_{X} from
stoichiometric or rich exhaust gas (lambda =1 or lambda < 1 respectively).

In addition, a number of selective catalytic reduction (SCR) methods have been developed in an attempt to reduce NO_{X} emissions by converting NO_{X} to nitrogen and water. Active SCR uses a reductant (for example, a nitrogenous reductant such as ammonia or an ammonia precursor, e.g. urea) which is added to a stream of exhaust gas and adsorbed on to a catalyst.

WO-A-2015/036797 discloses an exhaust system using active selective catalytic reduction (in the form of a urea injection system) for treating an exhaust gas from an internal combustion engine and a method for treating such exhaust gas.

In the presence of the nitrogenous reductant and the SCR catalyst, a number of reactions occur, with the result that NO_{X} is converted to elemental nitrogen and water. Such a system is very effective at reducing NO_{X} emissions but increases complexity of exhaust systems.

Passive SCR does not require a separate system to add reductant to the exhaust gas stream and may use a lean NO_{X} adsorber trap (LNT) to generate ammonia *in situ* and a downstream selective catalytic reduction catalyst. When the exhaust gas is produced in engine lean running conditions (relatively low fuel/oxygen ratio), NO_{X} is adsorbed on the LNT. The LNT is regenerated by contacting it intermittently with enriched (relatively high fuel/oxygen ratio) exhaust gas produced under the control of engine management systems. Such enrichment promotes desorption of adsorbed NO_{X} and reduction of NO_{X} on a reduction catalyst present in the LNT. The enriched exhaust gas also generates ammonia (NH₃) from NO_{X} on the LNT, which may become adsorbed on the SCR catalyst downstream and is available for reduction of NO_{X} that slips past the LNT in lean (lambda > 1) exhaust gas conditions. The efficiency of the SCR catalyst is dependent on the NO₂/NOx ratio and on temperature.

Nevertheless, as new regulations reduce the allowable level of NO_{X} emissions from IC engines, there is a continuing need to provide exhaust systems that reduce NO_{X} emission efficiently, effectively and cheaply.

It is an aim of the present invention to address this issue.

The present invention accordingly provides, in a first aspect, an exhaust system for an internal combustion engine, the exhaust system comprising, a lean NO_{X} trap, a NO_{X} storage and reduction zone on a wall flow monolithic substrate having a pre-coated porosity of 50% or greater, the NO_{X} storage and reduction zone comprising a platinum group metal loaded on one or more first support, the or each first support comprising one or more alkaline earth metal compound, and a selective catalytic reduction zone on a monolithic substrate, the selective catalytic reduction zone comprising copper or iron loaded on a second support, the second support comprising a molecular sieve, preferably an aluminosilicate zeolite. The washcoat loading of the NOx storage and reduction zone is in the range 30.5 to 183.1 g/L (0.5 to 3.0 g/in³).

The present invention is active for treating unburned hydrocarbons, carbon monoxide, particulate matter, oxides of nitrogen, hydrogen sulphide and ammonia (NH₃), which may be present individually or in some combination during the duty cycle of an upstream lean NO_{X} trap (LNT).

This is greatly advantageous, because such a system allows high conversion of NO_{X} produced by an IC engine including NO_{X} slipped from the lean NO_{X} trap, and also reduces other emissions such as particulates, CO and hydrocarbons. In particular, the relatively high porosity of the wall flow monolithic substrate enables effective catalytic activity even with more challenging recent drive test cycles for IC engines in vehicles.

The NOₓ storage and reduction zone may be on a first (wall flow) monolithic substrate (also referred to herein as a "wall-flow filter") and the selective catalytic reduction zone may be on a second (wall flow or flow through) monolithic substrate. Thus, there may be two separate monolithic substrates downstream of the lean NOₓ trap. This is advantageous because it effectively reduces NOₓ emissions.

Preferably, the NOₓ storage and reduction zone and the selective catalytic reduction zone may each be on portions of the same monolithic substrate, i.e. the wall flow monolithic substrate. Most preferably, the arrangement is that the NOₓ storage and reduction zone is obtained by coating open channels of the wall flow substrate monolith from a first end thereof and the selective catalytic reduction zone is obtained by coating open channels of the wall flow substrate monolith from a second end thereof. This is particularly advantageous where there is restricted space in an exhaust system e.g. of a vehicle and allows compact and less complex systems to be provided.

Preferably, where the two zones are on the same wall flow monolithic substrate, the NOₓ storage and reduction zone extends over between 10% and 90% of the axial length of the monolithic substrate and the selective catalytic reduction zone extends over between 90% and 10% of the axial length of the monolithic substrate. More preferably, the NOₓ storage and reduction zone extends over the same, or even more preferably, a greater portion of the axial length of the monolithic substrate than the selective catalytic reduction zone. The NOₓ storage and reduction zone may extend over between 40% and 90% of the axial length of the monolithic substrate and the selective catalytic reduction zone may extend over between 60% and 10 % of the axial length of the monolithic substrate.

There may be a gap (over the axial length of the monolithic substrate) between the end of the NOₓ storage and reduction zone and the start of the selective catalytic reduction zone.

Preferably, however, there is an overlap (over the axial length of the monolithic substrate) between the zones. A small overlap is advantageous because it decreases N₂O generation and limits the level of poisoning, e.g. from fuel or lubricant additives such as phosphorus, sulfur and alkali metals, and thus NOₓ slipped by the catalyst. Preferably, the axial length of the NOₓ storage and reduction zone and the axial length of the selective catalytic reduction zone may overlap by 20% or less, more preferably 15% or less, of the total axial length of the monolithic substrate. Higher amounts of overlap may result in a reduction in catalytic conversion.

A great advantage of the use of a wall flow monolithic substrate is that the substrate acts as a filter substrate reducing particulate emissions very effectively. A wall flow monolithic substrate usually comprises an inlet end, an outlet end, with an axial length extending between the inlet end and the outlet end, and a plurality of channels defined by internal walls of the wall flow substrate. The channels of the wall-flow filter are alternately blocked from either the inlet or outlet end so that the channels comprise inlet channels having an open inlet end and a closed outlet end and outlet channels having a closed inlet end and open outlet end. This ensures that the exhaust gas stream enters a channel from the inlet end, flows through the porous channel walls, and exits the filter from a different channel leading to the outlet end. Particulates in the exhaust gas stream are effectively trapped in the filter.

Preferably, the pre-coated porosity of the wall flow monolithic substrate is 52% or greater, preferably 55% or greater, more preferably 60% or greater and most preferably 62% or greater. This is advantageous because such relatively high porosities enable good exhaust gas flow through the channel walls in the monolithic substrate effectively enhancing the interaction between the NOₓ storage and reduction zone and the selective catalytic reduction zone thereby improving overall NOₓ conversion but without increasing back pressure unacceptably.

It is preferred that the pores of the wall flow monolithic substrate have a diameter (mean pore size (MPS)) in the range 12 µm to 25 µm. This range of pore diameter is suitable for washcoat coating by which the catalysts and supports may be applied to the walls of the channels, enabling a relatively high surface area for catalytic activity without increasing back pressure unacceptably. MPS may be determined by mercury porosimetry.

The NOₓ storage and reduction zone is usually present on the inlet channels of the inlet end of the wall flow monolithic substrate and the selective catalytic reduction zone is present on the outlet channels of the outlet end of the wall flow monolithic substrate. This orientation is preferable especially in higher temperature exhaust systems because it is advantageous for the SCR zone to be in the cooler location relative to the NOₓ storage and reduction zone to reduce ammonia slip.

The selective catalytic reduction zone may however be present on the inlet channels of the inlet end of the wall flow monolithic substrate and the NO_{X} storage and reduction zone on the outlet channels of the outlet end of the wall flow monolithic substrate. Surprisingly, this orientation (with the SCR zone upstream) is also effective
if the temperature window of operation of the SCR zone is not too high (which may lead to an increase in ammonia slip).

The first support preferably comprises one or more particulate inorganic oxides. Examples that may be suitable include spinels, alumina, ceria, ceria-zirconia, silica- alumina, titania, zirconia, alumina-zirconia, and combinations thereof. A preferred inorganic oxide comprises an aluminate, preferably an alkaline earth metal aluminate, most preferably magnesium aluminate, which is an alkaline earth metal compound according to the invention. Preferably, the particulate first support further comprises a cerium compound, preferably cerium oxide or a mixed oxide of cerium and zirconium. The cerium compound is preferably provided by impregnating the particulate first
support with a suitable cerium salt and drying and calcining the product. The particulate first support may comprise ceria-zirconia mixed oxide which are generally more thermally durable than ceria alone.
Preferably, the cerium loading (calculated as cerium oxide, CeO₂) of the particulate first support in in the range 3.53 to 141.26 g/L (100 to 4000 g/ft³), more preferably 17.66 to 105.94 g/L (500 to 3000 g/ft³), most preferably 21.19 g/L to 70.63 g/L (600 to 2000 g/ft³).

It is preferred that the first support comprises substantially no manganese. By substantially no manganese is meant 0.1 wt.% or less, preferably 0.05 wt.% or less. It is also preferred that the first support comprises substantially no zinc. By substantially no zinc is meant 0.1 wt.% or less, preferably 0.05 wt.% or less.

The alkaline earth metal compound of the first support according to the invention can also comprise preferably an oxide, carbonate and/or hydroxide of barium, strontium, calcium or magnesium or a mixture of any two or more of these compounds. Most preferably, the alkaline earth metal compound is in the form of an oxide or oxides. Although the alkaline earth metal compound may be present as an oxide during
preparation of the catalyst, in the presence of air or lean engine exhaust gas some or most of the alkaline earth metal compound, for example barium, may be in the form of the carbonate or possibly the hydroxide. If present as an oxide, carbonate and/or
hydroxide, the alkaline earth metal, e.g. barium, loading may be above 5.29 g/L (150 g/ft³). Alternatively, if present as an oxide, carbonate and/or hydroxide, the alkaline earth metal, e.g. barium, loading may be in the range of 3.17 to 5.29 g/L (90 to 150 g/ft³), preferably 3.53 to 5.12 g/L (100 to 145 g/ft³), more preferably 4.23 to 4.94 g/L (120 to 140 g/ft³), most preferably 4.69 ± 0.18 g/L (133 ± 5 g/ft³). The first support can comprise more than one alkaline earth metal compound. For example, preferably the first support comprises magnesium aluminate, which in turn supports the oxide, carbonate and/or hydroxide of barium, strontium, calcium or magnesium or a mixture of any two or more of these compounds.

Preferably the particulate first support further comprises a cerium compound in an amount such that the cerium to alkaline earth metal (preferably barium) weight ratio (preferably cerium to barium ratio) is in the range 1.1:1 to 40:1, preferably in the range 5:1 to 30:1 and most preferably in the range 10:1 to 20:1, wherein the weight ratio is calculated for cerium oxide and alkaline earth oxide.

Preferably, the NO_{X} storage and reduction zone comprises more than one first support comprising the alkaline earth metal compound. For example, a first, first support may be in the form of magnesium-containing alumina, for example a Mg-doped alumina comprising ceria and, optionally, a barium alkaline earth metal compound. More preferably, the alkaline earth metal compound may be contained in an Mg-doped alumina coated with ceria (derived from a soluble cerium source e.g. a cerium salt and so comprising nano-size ceria crystals supported on the Mg-doped alumina). A second, first support may comprise ceria and barium (in the form of particulate ceria or ceria- zirconia and an alkaline earth metal compound, e.g. an oxide, carbonate and/or hydroxide of barium, strontium, calcium or magnesium or a mixture of any two or more of these compounds, preferably barium loaded on the ceria e.g. impregnated from a barium salt).

The Mg-doped alumina may have varying ratios of Mg and alumina, and/or may include magnesium in the form of a magnesium-aluminate composition or compound, for example, a magnesium aluminium spinel.

Preferably, the molecular sieve is an aluminosilicate zeolite, which may be selected from a beta zeolite (BEA), a faujasite (FAU) (such as an X-zeolite or a Y-zeolite, including NaY and USY), an L-zeolite, a chabazite, a ZSM zeolite (e.g., ZSM-5 (MFI), ZSM-48 (MRE)), a so-called small pore molecular sieve having a maximum
pore opening of eight tetrahedral atoms, preferably CHA, ERI or AEI, an SSZ-zeolite (e.g., SSZ-13 (a CHA), SSZ-41, SSZ-33, SSZ-39), a ferrierite (FER), a mordenite (MOR), an offretite (OFF), a clinoptilolite (HEU), a silicalite, or an aluminophosphate molecular sieve (including metalloaluminophosphates) such as SAPO-34 (a CHA), a
mesoporous zeolite (e.g., MCM-41, MCM-49, SBA-15), or mixtures of any two or more thereof; more preferably, the zeolite is a beta zeolite (BEA), a ferrierite (FER), or a small pore molecular sieve selected from CHA, ERI and AEI; most preferably aluminosilicate CHA or AEI.

Preferably, the platinum group metal is platinum, palladium, or mixtures thereof. The preferred platinum group metal comprises a mixture of platinum and palladium in a Pt:Pd weight ratio greater than 3:1, preferably greater than 4:1 and more preferably 3:1 to 7:1, most preferably 3:1 to 6:1. This has been shown to be an effective catalyst for the NO_{X} storage and reduction zone. Surprisingly, the platinum group metal may contain 0.05wt% or less Rh and still be effective even in the NO_{X} reduction part of the storage and reduction catalytic reaction. More preferably, the platinum group metal does not comprise rhodium. One skilled in the art would understand that this does not mean the total absence of rhodium, but that trace amounts of rhodium that had not been deliberately added to the catalyst may be present.

It is preferred that the total platinum group metal loading in the NOx storage and reduction zone is in the range 0.18 to 3.53g/L (5 to 100 gft⁻³), preferably 0.35 to 1.77 g/L (10 to 50 gft⁻³), more preferably in the range in the range 0.53 to 1.41 g/L (15 to 40 gft⁻³), more preferably in the range 0.53 to 1.24 g/L (15 to 35 gft⁻³), and most preferably in the range 0.53 to 1.06 g/L (15 to 30 gft⁻³).

Usually, the exhaust system will not comprise a nitrogenous reductant or a precursor thereof (e.g. urea and/or ammonia) injection system which is advantageous because such injection systems may increase the cost and complexity of the system.

The washcoat loading of the NO_{X} storage and reduction zone is in the
range 30.5 to 183.1 g/L(0.5 to 3.0 g/in³), such as 48.8 to 122g/L (0.8 to 2.0 g/in³

The washcoat for the NO_{X} storage and reduction zone may be applied once only. Thus, the NO_{X} storage and reduction zone may be in a single layer. This has advantages, especially on porous wall flow filters as in the present invention, because a single layer may reduce backpressure.

The washcoat loading of the selective catalytic zone may be in the range 12.2 to 183.1 g/L (0.2 to 3.0 g/in³), preferably 30.5 to122.1 g/L (0.5 to 2.0g/in³) or 48.8 g/L (0.8 g/in³) to 97.6 g/L (1.6 g/in³) (based on Cu or Fe). Cu is preferred in the selective catalytic zone.

As discussed herein, surprisingly, the platinum group metal of the NOx storage and reduction zone may contain reduced (preferably 0.05wt% or less Rh) levels of Rh, and even more preferably the platinum group metal may contain substantially no Rh. If the platinum group metal of the NO_{X} storage and reduction zone contains reduced or substantially no Rh then, preferably, the first support comprises alkaline earth metal, more preferably barium, at a loading in the range of 3.18 to 5.3 g/L (90 to 150 g/ft³), preferably 3.53 to 5.12 g/L (100 to 145 g/ft³), more preferably 4.24 to 4.94 g/L (120 to 140 g/ft³), most preferably 4.70 ± 0.18 g/L (133 ± 5 g/ft³) barium. It is also preferred, if the platinum group metal contains reduced or substantially no Rh, that the washcoat for the NO_{X} storage and reduction zone is applied once only. Thus, the NO_{X} storage and reduction zone is preferably in a single layer.

In the first aspect of the invention there is provided a wall flow monolithic substrate with a NO_{X} storage and reduction zone; and a selective catalytic zone.

Furthermore, it is provided a catalytic wall flow monolithic substrate having a pre-coated porosity of 50% or greater, the substrate comprising a NO_{X} storage and reduction zone, the NO_{X} storage and reduction zone comprising a platinum group metal loaded on one or more first support, the first
support comprising one or more alkaline earth metal compound, and a selective catalytic reduction zone, the selective catalytic reduction zone comprising copper or iron loaded on a second support, the second support comprising a molecular sieve, preferably an aluminosilicate zeolite.

The optional and preferred features of the second aspect of the invention correspond to those optional and preferred features of the first aspect.

Usually, the zones may be deposited on the substrate using washcoat procedures. A general process for preparing the monolith substrate using a washcoat procedure is set out below. The order of addition of the first e.g. NO_{X} storage and reduction zone and
the second e.g. selective catalytic reduction zone onto the substrate is not considered critical. Thus, the first zone can be washcoated on the substrate prior to washcoating the second zone or the second zone can be washcoated on the substrate prior to washcoating the first zone.

Washcoating is preferably performed by slurrying (e.g. in water) solid particles making up the support so that they have a particle size of less than 20 microns in an average diameter. The slurry preferably contains between 4 to 40 weight percent solids, more preferably between 6 to 30 weight percent solids. Additional components, such as stabilizers or promoters may also be incorporated in the slurry as a mixture of water soluble or water-dispersible compounds or complexes. The substrate may then be coated one or more times with the slurry such that there will be deposited on the substrate the desired loading of catalytic materials.

The platinum group metal may be added to the support-coated substrate monolith by any known means, including impregnation, adsorption, or ion-exchange of a platinum compound (such as platinum nitrate), but is conveniently added to the washcoat slurry as a soluble platinum group metal salt or salts. Base metals (e.g. Cu or Fe) may be conveniently added to the washcoat slurry as a soluble metal salt or salts (e.g. copper nitrate).

Furthermore, it is provided a method of making a catalysed monolithic substrate, the method comprising, providing a wall flow monolithic substrate having a pre-coated porosity of 50% or greater, preparing a NOₓ storage and reduction zone washcoat comprising a source of a platinum group metal and an alkaline earth metal compound, applying the NOₓ storage and reduction zone washcoat to a first portion of the monolithic substrate, preparing a selective catalytic reduction zone washcoat comprising a molecular sieve, preferably an aluminosilicate zeolite, and a source of copper or a source of iron, and applying the selective catalytic reduction zone washcoat to a second portion of the monolithic substrate.

In a second aspect, the present invention provides a method of treating exhaust gases from an internal combustion engine, the method comprising flowing the exhaust gas through an exhaust system as in the first aspect, wherein the exhaust gas comprises a lean exhaust gas intermittently becoming rich. The terms "lean" and "rich" are relative to the stoichiometric point of fuel combustion in the engine, i.e. the air to fuel ratio by weight that combusts the fuel perfectly as hydrocarbon plus oxygen to carbon dioxide and water. Lean exhaust gases are formed where oxidising species (O₂ and NOₓ) are in excess relative to this stoichiometric point, rich exhaust gases are formed wherein the reducing species (unburned hydrocarbons and carbon monoxide) is in excess of the stoichiometric point. The composition of the exhaust gas can also be referred to by reference to an output ("lambda") of an oxygen sensor. A lambda value of 1 is a product of stoichiometric combustion; a lambda value of >1 is a product of lean combustion (relative to the stoichiometric air/fuel ratio); and a lambda value of <1 is a product of rich combustion (relative to the stoichiometric air/fuel ratio).

The above and other characteristics, features and advantages of the present invention will become apparent from the following detailed description, taken in conjunction with the accompanying drawings and the Examples, which illustrate, by way of example, the principles of the invention.

Reference throughout this specification to "an aspect" means that a particular feature, structure or characteristic described in connection with the aspect is included in at least one aspect of the present invention. Thus, appearances of the phrase "in an aspect" in various places throughout this specification are not necessarily all referring to the same aspect, but may refer to different aspects. Furthermore, the particular features, structures or characteristics of any aspect of the invention may be combined in any suitable manner, as would be apparent to one of ordinary skill in the art from this disclosure, in one or more aspects.

In the description provided herein, numerous specific details are set forth. However, it is understood that the invention may be practised without these specific details. In other instances, well-known methods, structures and techniques have not been shown in detail in order not to obscure an understanding of this description.

In order that the present invention may be better understood, reference is made to accompanying drawings, in which:
Figure 1 illustrates schematically a first exhaust system according to the present invention, and
Figure 2 illustrates schematically a second exhaust system according to the present invention.

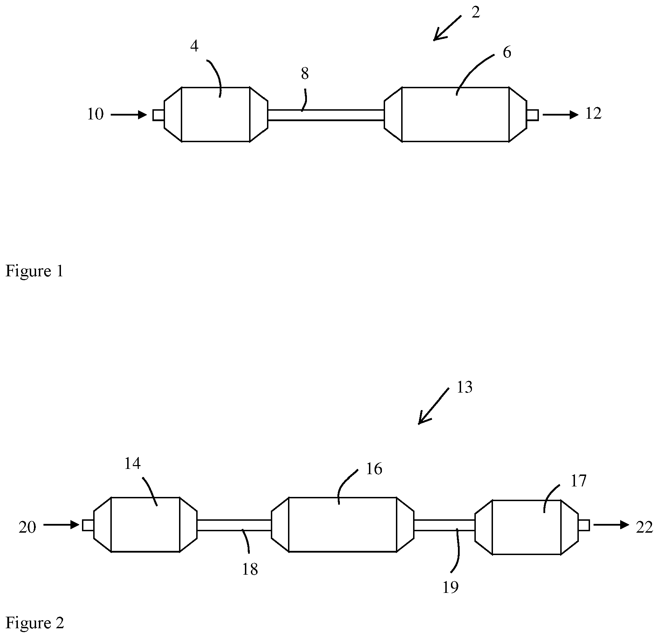

Figure 1 shows schematically a first exhaust system 2 of the present invention. The exhaust system 2 comprises a first monolithic substrate 4 which forms a lean NOₓ trap (LNT) catalyst. The exhaust gases from the engine (not shown) upstream of the first monolithic substrate / lean NOₓ trap 4 enter the first monolithic substrate 4 through inlet 10 and exit the first monolithic substrate 4 through pipe 8. The exhaust gases then enter a second monolithic substrate 6 before exiting through outlet 12. Downstream of outlet 12 there may be other catalytic zones or the exhaust gases may be released to atmosphere.

The second monolithic substrate 6 is a filter, in particular a wall flow monolith substrate having a honeycomb structure with many small, parallel thin-walled channels running axially through the substrate, with the channels of the wall flow substrate being alternately blocked, which allows the exhaust gas stream to enter a channel from the inlet, then flow through the porous channel walls, and exit the filter from a different channel leading to the outlet. The second monolithic substrate 6 contains two zones, a NOₓ storage and reduction (NSC) zone of a platinum group metal and a first, first support of a Mg-doped alumina coated with ceria (derived from a soluble cerium source e.g. a cerium salt and so comprising nano-size ceria crystals supported on the Mg-doped alumina) and a second, first support of ceria and barium (in the form of particulate ceria supporting a barium compound e.g. impregnated from a soluble barium salt) provided on and/or within the walls of the inlet channels at the inlet end of the second monolithic substrate 6 and a selective catalytic reduction (SCR) zone provided on and/or within the walls of the outlet channels at the outlet end of the second monolithic substrate 6. The exhaust system of Figure 1 may be formed as described below in the Examples.

Figure 2 shows schematically a second exhaust system 13 of the present invention. The exhaust system 13 comprises a first monolithic substrate 14 which forms a lean NOₓ trap catalyst. As in Figure 1, the exhaust gases from the engine (not shown) upstream of the first monolithic substrate / lean NOₓ trap 14 enter the first monolithic substrate 14 through inlet 20 and exit the first monolithic substrate 14 through pipe 18. The exhaust gases then enter a second monolithic substrate 16 before exiting through pipe 19 to a third monolithic substrate 17 and then through outlet 22. Downstream of outlet 22 there may be other catalytic zones or the exhaust gases may be released to atmosphere.

The second monolithic substrate 16 is a filter, wall flow monolithic substrate having a NOₓ storage and reduction zone provided on the walls of the channels. The third monolithic substrate 17 is a flow through monolithic substrate having a uniform coating throughout of a selective catalytic reduction zone.

The following Examples are provided by way of illustration only.

### Example 1

A standard lean NO_{X} trap (LNT) catalyst was prepared on a 1.4 litre volume ceramic substrate having 400 cells per square inch. The catalyst had a total PGM loading of 4.17 g/L (118 g ft⁻³) and a Pt:Pd:Rh weight ratio of 94:19:5.

### Example 2

### Preparation of PGM/NOx storage and reduction catalytic zone (NSC) coating

Ce/magnesium-aluminate spinel was slurried in water and milled to d90 of less than 10 micron. Soluble salts of Pt and Pd were added followed by cerium oxide and barium acetate. The slurry was stirred to homogenise and applied to the inlet channels of a 3.0 litre volume SiC wall-flow filter substrate having 300 cells per square inch, a wall thickness of 12.5 Mil (thousands of an inch) and 63% porosity. The coating was dried
using forced air flow. The coating depth was 55% of the total substrate length when measured from the inlet side.

### Preparation of 3 wt. % Cu/CHA zeolite coating as passive Selective Catalytic

### Reduction (SCR) catalyst

Commercially available aluminosilicate CHA zeolite (a chabazite) was added to an aqueous solution of Cu(NO₃)₂ with stirring. The slurry was filtered, then washed and dried. The procedure can be repeated, if necessary, to achieve a desired metal loading. The final product was calcined. After mixing, binders and rheology modifiers were added to form a washcoat composition. This washcoat was applied to the outlet end of the SiC filter substrate. It was then dried and calcined at 500°C. The coating depth was 55% of the total substrate length when measured from the outlet side.

The finished catalyst coating on the filter had a Pt:Pd weight ratio of 5:1 and total PGM loading of 0.85 g/L (24 gft⁻³).

### Example 3

Ce/magnesium-aluminate spinel was slurried in water and milled to d90 of less than 10 micron. Soluble salts of Pt and Pd were added followed by cerium oxide and barium acetate. The slurry was stirred to homogenise and applied to the entire volume of a 3.0
litre volume SiC wall-flow filter substrate having 300 cells per square inch, a wall thickness of 12.5 Mil (thousands of an inch) and 63% porosity. The coating was dried using forced air flow and calcined at 500°C.

The finished catalyst coating on the filter had a Pt:Pd weight ratio of 5:1 and total PGM loading of 1.7 g/L (48 gft⁻³).

### Example 4

Commercially available aluminosilicate CHA zeolite (a chabazite) was added to an aqueous solution of Cu(NO₃)₂ with stirring. The slurry was filtered, then washed and dried. The procedure can be repeated to achieve a desired metal loading. The final product was calcined. After mixing, binders and rheology modifiers were added to form a washcoat composition. This washcoat was applied to a 1.25 litre volume ceramic flow through substrate having 350 cells per square inch. The coating was dried and calcined at 500°C.

### EngineTesting

The catalyst from Example 1 was hydrothermally aged at 800°C for 5 hours. The catalysts from Example 2 and Example 3 were hydrothermally aged at 800°C for 16 hours. The catalyst from Example 4 was hydrothermally aged at 750°C for 24 hours. The aged catalysts of Examples 1, 2, 3 and 4 were tested on a 1.6 litre engine employing low
pressure exhaust gas recirculation, running simulated Common ARTEMIS (Assessment and Reliability of Transport Emissions Models and Inventory Systems) Driving Cycles (CADC). The engine was enabled to run rich purges at fixed points over the cycle. A total of 12 rich purges were performed over the complete cycle. The % NO_{X} conversion over
the CADC cycle is shown in Table 1 for Examples 1 and 2. Also included in Table 1 are results for a system of Examples 1, 3 and 4, where the c PGM/ NOx storage and reduction coating (NSC) is on Example 3 and the SCR coating is on Example 4 as a separate monolith downstream of the PGM/NOx storage and reduction coating as shown in Figure 2.

**Table 1 - NOₓ conversion over CADC**

| **System** | **% NOₓ conversion** |
|---|---|
| Example 1 | 38 |
| Example 1 and Example 2 | 51 |
| Example 1 + Example 3 + Example 4 | 76 |

The results in Table 1 show that Example 2 provides significant additional NOx conversion when tested in combination with Example 1. Further additional NOx conversion is achieved from the system combining Examples 1, 3 and 4 where the SCR coating is located on a separate monolith downstream of the PGM/NOₓ storage and reduction coating.

## Claims

1. An exhaust system (2, 13) for an internal combustion engine, the exhaust system comprising,
a. a lean NOₓ trap,
b. a NOₓ storage and reduction zone on a wall flow monolithic substrate (6, 16) having a pre-coated porosity of 50% or greater, the NOₓ storage and reduction zone comprising a platinum group metal loaded on one or more first support, the or each first support comprising one or more alkaline earth metal compound, and
c. a selective catalytic reduction zone on a monolithic substrate (6, 17), the selective catalytic reduction zone comprising copper or iron loaded on a second support, the second support comprising a molecular sieve;
wherein the washcoat loading of the NOx storage and reduction zone is in the range 30.5 to 183.1 g/L (0.5 to 3.0 g/in³).

2. An exhaust system according to claim 1, wherein the NOₓ storage and reduction zone is on a first wall flow monolithic substrate and the selective catalytic reduction zone is on a second monolithic substrate.

3. An exhaust system according to claim 1, wherein the NOₓ storage and reduction zone and the selective catalytic reduction zone are each on portions of the same wall flow monolithic substrate.

4. An exhaust system according to claim 3, wherein the NOₓ storage and reduction zone is disposed in channels of the wall flow monolithic substrate from one end thereof and the selective catalytic reduction zone is disposed in channels of the wall flow monolithic substrate from the other end thereof.

5. An exhaust system according to claim 4, wherein the NOₓ storage and reduction zone is on and/or within the walls of the inlet channels of the inlet end of the monolithic substrate and the selective catalytic reduction zone is on and/or within the walls of the outlet channels of the outlet end of the monolithic substrate.

6. An exhaust system according to any preceding claim, wherein the or each first support comprises a cerium compound, alumina and/or an aluminate, preferably cerium oxide or a mixed oxide of cerium and zirconium

7. An exhaust system according to any preceding claim, wherein the molecular sieve is selected from a beta zeolite (BEA), a faujasite (FAU), an L-zeolite, a chabazite, a ZSM zeolite, a small pore molecular sieve having a maximum pore opening of eight tetrahedral atoms, preferably CHA, ERI or AEI, an SSZ-zeolite, a ferrierite (FER), a mordenite (MOR), an offretite (OFF), a clinoptilolite (HEU), a silicalite, an aluminophosphate molecular sieve, a mesoporous zeolite, or mixtures of any two or more thereof.

8. An exhaust system according to any preceding claim, wherein the platinum group metal in the NO_{X} storage and reduction zone is platinum, palladium, or mixtures thereof and is optionally present in the range 0.18 to 3.5 g/L (5 to 100 gft⁻³).

9. An exhaust system according to claim 8, wherein the platinum group metal comprises a mixture of platinum and palladium in a Pt:Pd weight ratio in the range 2:1 to 7:1, preferably 3:1 to 6:1.

10. An exhaust system according to any preceding claim wherein the platinum group metal contains 0.05wt% or less Rh, and preferably contains substantially no Rh.

11. An exhaust system according to claim 10, wherein the NOₓ storage and reduction zone is applied to be in a single layer.

12. An exhaust system according to any preceding claim, wherein the NOₓ storage and reduction zone is upstream of the selective catalytic zone.

13. An exhaust system according to any preceding claim, wherein the first support comprises an alkaline earth metal at a loading in the range of 3.2 to 5.3 g/L (90 to 150 g/ft³).

14. A method of treating exhaust gases from an internal combustion engine, the method comprising flowing the exhaust gas through an exhaust system according to any one of claims 1 to 13, wherein the exhaust gas comprises a lean exhaust gas intermittently becoming rich.

15. A compression ignition engine fitted with an exhaust system according to any one of claims 1 to 13.

16. A vehicle comprising a compression ignition engine and an exhaust system according to claim 15.

## Patentansprüche

1. Abgassystem (2, 13) für einen Verbrennungsmotor, wobei das Abgassystem umfasst.
a. eine Mager-NOₓ-Falle,
b. eine NOₓ-Speicher- und Reduktionszone auf einem monolithischen Wandströmungssubstrat (6, 16) mit einer vorbeschichteten Porosität von 50 % oder darüber, wobei die NOₓ-Speicher- und -Reduktionszone ein Metall der Platingruppe umfasst, das auf einen oder mehrere erste(n) Träger geladen ist, wobei der oder jede erste Träger eine oder mehrere Erdalkalimetallverbindungen umfasst, und
c. eine Zone selektiver katalytischer Reduktion auf einem monolithischen Substrat (6, 17), wobei die Zone selektiver katalytischer Reduktion Kupfer oder Eisen umfasst, das auf einen zweiten Träger geladen ist, wobei der zweite Träger ein Molekularsieb umfasst;
wobei die Washcoat-Beladung der NOₓ-Speicher- und -Reduktionszone im Bereich von 30,5 bis 183,1 g/l (0,5 bis 3,0 g/in³) liegt.

2. Abgassystem nach Anspruch 1, wobei die NOₓ-Speicher- und -Reduktionszone auf einem ersten monolithischen Wandströmungssubstrat ist, und die Zone selektiver katalytischer Reduktion auf einem zweiten monolithischen Substrat ist.

3. Abgassystem nach Anspruch 1, wobei die NOₓ-Speicher- und -Reduktionszone und die Zone selektiver katalytischer Reduktion jeweils auf Abschnitten des gleichen monolithischen Wandströmungssubstrats sind.

4. Abgassystem nach Anspruch 3, wobei die NOₓ-Speicher- und -Reduktionszone in Kanälen des monolithischen Wandströmungssubstrats von einem Ende davon angeordnet ist, und die Zone selektiver katalytischer Reduktion in Kanälen des monolithischen Wandströmungssubstrats vom anderen Ende davon angeordnet ist.

5. Abgassystem nach Anspruch 4, wobei die NOₓ-Speicher- und -Reduktionszone auf den und/oder innerhalb der Wände der Einlasskanäle des Einlass-Endes des monolithischen Substrats ist, und die Zone selektiver katalytischer Reduktion auf den und/oder innerhalb der Wände der Auslasskanäle des Auslass-Endes des monolithischen Substrats ist.

6. Abgassystem nach einem der vorhergehenden Ansprüche, wobei der oder jeder erste Träger eine Cerverbindung, Aluminiumoxid und oder ein Aluminat, vorzugweise Ceroxid oder ein Mischoxid von Cer und Zirconium umfasst.

7. Abgassystem nach einem der vorhergehenden Ansprüche, wobei das Molekularsieb aus einem Beta-Zeolith (BEA), einem Faujasit (FAU), einem L-Zeolith, einem Chabazit, einem ZSM-Zeolith, einem kleinporigen Molekularsieb mit einer maximalen Porenöffnung von acht tetraedrischen Atomen, vorzugsweise CHA, ERI oder AEI, einem SSZ-Zeolith, einem Ferrierit (FER), einem Mordenit (MOR), einem Offretit (OFF), einem Klinoptilolit (HEU), einem Silikalit, einem Aluminophosphat-Molekularsieb, einem mesoporösen Zeolith oder Mischungen aus beliebigen zwei oder mehreren davon ausgewählt ist.

8. Abgassystem nach einem der vorhergehenden Ansprüche, wobei es sich bei dem Metall der Platingruppe in der NOₓ-Speicher- und -Reduktionszone um Platinum, Palladium oder Mischungen davon handelt und dasselbe gegebenenfalls im Bereich von 0,18 bis 3,5 g/l (5 bis 100 gft⁻³) vorhanden ist.

9. Abgassystem nach Anspruch 8, wobei das Metall der Platingruppe eine Mischung aus Platin und Palladium mit einem Pt:Pd-Gewichtsverhältnis im Bereich von 2:1 bis 7:1 und vorzugsweise 3:1 bis 6:1 ist.

10. Abgassystem nach einem der vorhergehenden Ansprüche, wobei das Metall der Platingruppe 0,05 Gew% oder weniger Rh und vorzugsweise im Wesentlichen kein Rh enthält.

11. Abgassystem nach Anspruch 10, wobei die NOₓ-Speicher- und Reduktionszone so aufgebracht ist, dass sie in einer einzigen Schicht ist.

12. Abgassystem nach einem der vorhergehenden Ansprüche, wobei die NOₓ-Speicher- und Reduktionszone stromaufwärts der selektiven katalytischen Zone ist.

13. Abgassystem nach einem der vorhergehenden Ansprüche, wobei der erste Träger ein Erdalkalimetall bei einer Beladung im Bereich von 3,2 bis 5,3 g/l (90 bis 150 g/ft³) umfasst.

14. Verfahren zur Behandlung von Abgasen aus einem Verbrennungsmotor, wobei das Verfahren ein Strömenlassen des Abgases durch ein Abgassystem nach einem der Ansprüche 1 bis 13 umfasst, wobei das Abgassystem ein mageres Abgas umfasst, das zeitweise fett wird.

15. Kompressionszündungsmotor, der mit einem Abgassystem nach einem der Ansprüche 1 bis 13 ausgestattet ist.

16. Fahrzeug, umfassend einen Kompressionszündungsmotor und ein Abgassystem nach Anspruch 15.

## Revendications

1. Système d'échappement (2, 13) pour un moteur à combustion interne, le système d'échappement comprenant,
a. un piège à NOₓ en mélange pauvre,
b. une zone de stockage et de réduction de NOₓ sur un substrat monolithique à écoulement sur paroi (6, 16) ayant une porosité en précouche de 50 % ou plus, la zone de stockage et de réduction de NOₓ comprenant un métal du groupe du platine chargé sur un ou plusieurs premier(s) support(s), le ou chaque premier support comprenant un ou plusieurs composé(s) de métal alcalinoterreux, et
c. une zone de réduction catalytique sélective sur un substrat monolithique (6, 17), la zone de réduction catalytique sélective comprenant du cuivre ou du fer chargé sur un deuxième support, le deuxième support comprenant un tamis moléculaire ;
dans lequel le chargement de couche lavis de la zone de stockage et de réduction de NOₓ est compris dans la gamme allant de 30,5 à 183,1 g/L (0,5 à 3,0 g/pouce³).

2. Système d'échappement selon la revendication 1, dans lequel la zone de stockage et de réduction de NOₓ est sur un premier substrat monolithique à écoulement sur paroi et la zone de réduction catalytique sélective est sur un deuxième substrat monolithique.

3. Système d'échappement selon la revendication 1, dans lequel la zone de stockage et de réduction de NOₓ et la zone de réduction catalytique sélective sont chacune sur des portions du même substrat monolithique à écoulement sur paroi.

4. Système d'échappement selon la revendication 3, dans lequel la zone de stockage et de réduction de NOₓ est disposée dans des canaux du substrat monolithique à écoulement sur paroi à partir d'une extrémité de celui-ci et la zone de réduction catalytique sélective est disposée dans des canaux du substrat monolithique à écoulement sur paroi à partir de l'autre extrémité de celui-ci.

5. Système d'échappement selon la revendication 4, dans lequel la zone de stockage et de réduction de NOₓ est sur les et/ou au sein des parois des canaux d'entrée de l'extrémité d'entrée du substrat monolithique et la zone de réduction catalytique sélective est sur les et/ou au sein des parois des canaux de sortie de l'extrémité de sortie du substrat monolithique.

6. Système d'échappement selon l'une quelconque des revendications précédentes, dans lequel le ou chaque premier support comprend un composé de cérium, de l'alumine et/ou un aluminate, de préférence de l'oxyde de cérium ou un oxyde mixte de cérium et de zirconium.

7. Système d'échappement selon l'une quelconque des revendications précédentes, dans lequel le tamis moléculaire est sélectionné parmi une zéolithe bêta (BEA), une faujasite (FAU), une zéolithe L, une chabazite, une zéolithe ZSM, un tamis moléculaire à petits pores ayant une ouverture de pore maximale de huit atomes tétraédriques, de préférence CHA, ERI ou AEI, une zéolithe SSZ, une ferriérite (FER), une mordénite (MOR), une offrétite (OFF), une clinoptilolite (HEU), une silicalite, un tamis moléculaire aluminophosphate, une zéolithe mésoporeuse, ou des mélanges de deux quelconques de ceux-ci ou plus.

8. Système d'échappement selon l'une quelconque des revendications précédentes, dans lequel le métal du groupe du platine dans la zone de stockage et de réduction de NOₓ est le platine, le palladium, ou des mélanges de ceux-ci et est facultativement présent dans la gamme allant de 0,18 à 3,5 g/L (5 à 100 g.pied⁻³).

9. Système d'échappement selon la revendication 8, dans lequel le métal du groupe du platine comprend un mélange de platine et de palladium dans un rapport en poids Pt:Pd compris dans la gamme allant de 2:1 à 7:1, de préférence de 3:1 à 6:1.

10. Système d'échappement selon l'une quelconque des revendications précédentes dans lequel le métal du groupe du platine contient 0,05 % en poids ou moins de Rh, et de préférence ne contient substantiellement pas de Rh.

11. Système d'échappement selon la revendication 10, dans lequel la zone de stockage et de réduction de NOₓ est appliquée de sorte à être en une seule couche.

12. Système d'échappement selon l'une quelconque des revendications précédentes, dans lequel la zone de stockage et de réduction de NOₓ est en amont de la zone catalytique sélective.

13. Système d'échappement selon l'une quelconque des revendications précédentes, dans lequel le premier support comprend un métal alcalinoterreux à un chargement compris dans la gamme allant de 3,2 à 5,3 g/L (90 à 150 g/pied³).

14. Méthode de traitement de gaz d'échappement issus d'un moteur à combustion interne, la méthode comprenant le fait de faire s'écouler le gaz d'échappement à travers un système d'échappement selon l'une quelconque des revendications 1 à 13, dans laquelle le gaz d'échappement comprend un gaz d'échappement pauvre devenant riche par intermittence.

15. Moteur à allumage par compression équipé d'un système d'échappement selon l'une quelconque des revendications 1 à 13.

16. Véhicule comprenant un moteur à allumage par compression et un système d'échappement selon la revendication 15.
